# DEMANDE DE BREVET EUROPEEN

(11) **EP 1 389 724 A1**
(43) Date de publication de la demande: **18.02.2004**
(21) Numéro de dépôt: 03291685.0
(22) Date de dépôt: 07.07.2003
(51) Int. Cl.: F41B 3/02

(54) **Fronde du type lance-pierres**

(30) Priorité: 12.08.2002 FR 0210211
(71) Demandeur: Ste Amiaud Peche, 85140 St Martin des Noyers (FR)
(72) Inventeur: Amiaud, Michel, 85140 St. Martin des Noyers (FR)
(74) Mandataire: Bonnetat, Christian

(57) **Abrégé**

Fronde du type lance-pierres, comportant une fourche (2) à deux branches (3,4), un manche (5) portant ladite fourche, des liens élastiques (7,8) et une poche (9) de réception de projectile (P). Selon l'invention, la direction générale dudit manche (5) est inclinée par rapport à la fourche (2), de façon que, lorsque ladite fronde est tenue par un tireur (12) en position de tir, l'extrémité (13) dudit manche (5), opposée à ladite fourche (2), se trouve en regard d'une cuisse (14) dudit tireur (12), et ladite extrémité (13) dudit manche (5), opposée à ladite fourche (2), porte une pièce d'appui (10) apte à appuyer ladite fronde sur ladite cuisse (14).

## Description

La présente invention concerne les frondes du type lance-pierres, c'est-à-dire comportant :
- une fourche à deux branches ;
- un manche portant ladite fourche ;
- des liens élastiques attachés respectivement aux extrémités libres desdites branches, opposées audit manche ; et
- une poche de réception de projectile reliant les extrémités desdits liens élastiques, opposées à ladite fourche.

Les frondes de ce type constituent non seulement des jouets, notamment pour les enfants, mais encore des instruments de pêche destinés à lancer, à des distances relativement grandes, des appâts ou des amorces.

Dans ces frondes connues, le manche est généralement une simple poignée, apte à être tenue par une main d'un tireur. Cependant, notamment pour augmenter la longueur et/ou la précision du jet de projectiles, on connaît des frondes dans lesquelles le manche est suffisamment long pour pouvoir prendre appui sur le sol par son extrémité opposée à la fourche, à la manière des anciennes fourches de support des mousquets. Il est ainsi plus aisé de fixer la position de la fronde pendant le tir, tout en ayant la possibilité de tendre plus fortement les liens élastiques.

Toutefois, il peut se faire qu'un tel appui sur le sol soit difficile ou impossible, par exemple à cause de la nature du sol, ou bien soit interdit, par exemple par les règlements de certaines compétitions de pêche.

Aussi, l'objet de la présente invention est une fronde du type lance-pierres qui est apte à réaliser des performances comparables à celles d'une fronde à appui au sol, sans pour cela nécessiter un tel appui.

A cette fin, selon l'invention, la fronde du type mentionné ci-dessus est remarquable en ce que :
- la direction générale dudit manche est inclinée par rapport à la fourche, de façon que, lorsque ladite fronde est tenue par un tireur en position de tir, l'extrémité dudit manche, opposée à ladite fourche, se trouve en regard d'une cuisse dudit tireur ; et
- ladite extrémité dudit manche, opposée à ladite fourche, porte une pièce d'appui apte à appuyer ladite fronde sur ladite cuisse.

Ainsi, grâce à la présente invention, l'appui au sol est remplacé par un appui sur la cuisse du tireur, ce qui procure une distance et une précision de tir similaires.

De préférence, ledit manche comporte une petite partie (comparable à la poignée de la plupart des frondes), qui porte ladite fourche, et une grande partie, qui porte ladite pièce d'appui et dont la direction est inclinée par rapport au plan de ladite fourche, lesdites petite et grande parties étant reliées par un coude intermédiaire.

Afin que ladite fronde soit adaptable à différents tireurs, il est avantageux que ledit manche --par exemple la grande partie-- soit réglable en longueur. Une longueur appropriée, réglée une fois, peut être aisément retrouvée et reproduite par la suite grâce à des repères de longueur portés par ledit manche.

La pièce d'appui présente de préférence la forme d'un arc, apte à envelopper anatomiquement la cuisse du tireur.

Le manche peut être de construction tubulaire et il peut être recouvert, au moins à l'emplacement par lequel il est saisi par le tireur, d'un revêtement antidérapant.

Par ailleurs, pour faciliter l'usage de la fronde conforme à la présente invention, on peut prévoir une poignée de préhension --par exemple en forme d'anneau-- solidaire de ladite poche de réception de projectile.

Les figures du dessin annexé feront bien comprendre comment l'invention peut être réalisée. Sur ces figures, des références identiques désignent des éléments semblables.

La figure 1 est une vue en perspective d'un exemple de réalisation de la fronde conforme à la présente invention.

La figure 2 illustre le maniement de la fronde de la figure 1.

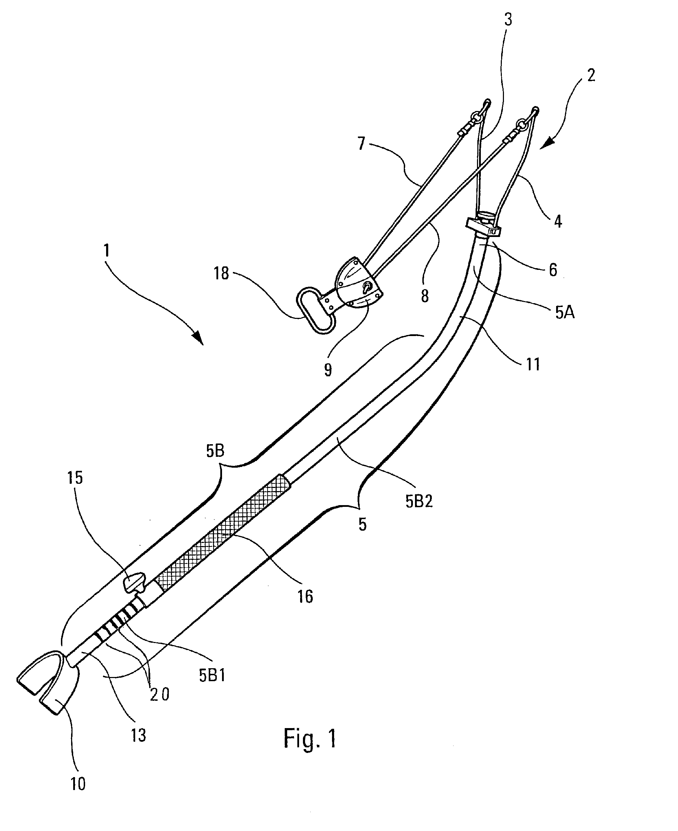

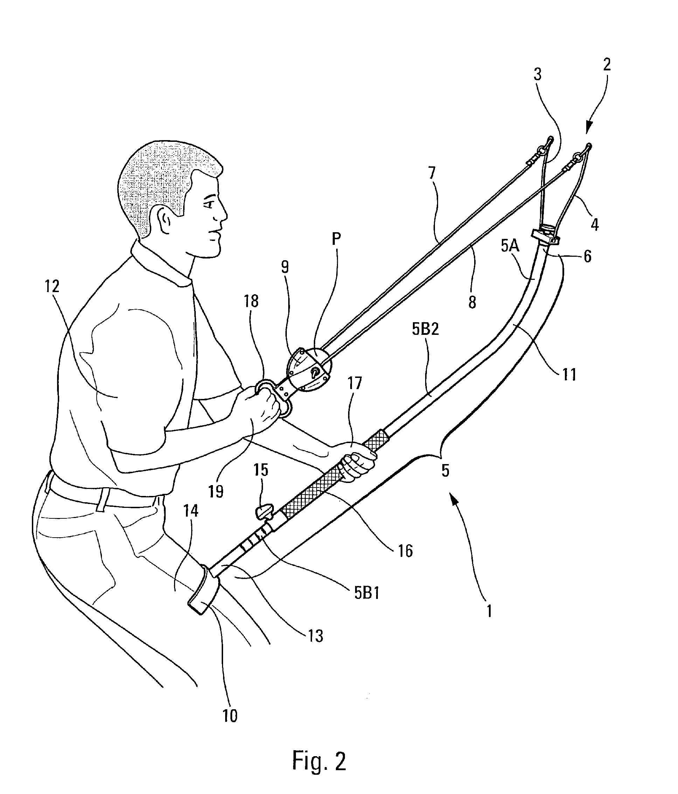

La fronde 1, du type lance-pierres, représentée sur les figures 1 et 2 comporte:
- une fourche 2, constituée de deux branches 3 et 4;
- un manche tubulaire 5 portant ladite fourche 2 à son extrémité 6;
- des liens élastiques 7 et 8, respectivement attachés aux extrémités libres desdites branches 3 et 4, opposées au manche 5 ; et
- une poche de réception 9 pour un projectile P, par exemple une boulette d'amorce, (voir la figure 2), ladite poche reliant les extrémités des liens élastiques 7 et 8 opposées à la fourche 2.

Conformément à la présente invention, le manche 5 comporte une petite partie 5A, qui porte la fourche 2, et une grande partie 5B, qui porte une pièce d'appui 10 à son extrémité 13 opposée à la petite partie 5A et dont la direction est inclinée par rapport à la fourche 2. Les parties 5A et 5B sont reliées par un coude intermédiaire 11.

Du fait de l'inclinaison de la grande partie 5B, la direction générale du manche 5 est inclinée par rapport à la fourche 2, de façon que (voir la figure 2), lorsque le manche 5 est tenu par un tireur 12 pour que la fourche 2 soit en position de tir, l'extrémité 13 dudit manche 5, opposée à la fourche 2, se trouve en regard de la cuisse 14 dudit tireur 12.

La pièce d'appui 10 présente la forme d'un arc et, pendant le tir, elle enveloppe la cuisse 14 contre laquelle elle s'appuie.

La grande partie 5B du manche 5 est constituée de deux éléments tubulaires 5B1 et 5B2 pouvant coulisser de façon télescopique pour ajuster la longueur dudit manche à toute valeur désirée, cette longueur pouvant être fixée à l'aide d'une vis de serrage 15, par exemple.

Un revêtement de préhension antidérapant 16 est prévu autour du manche 5, à l'emplacement auquel la main 17 du tireur 12 saisit ledit manche 5.

Pour faciliter l'usage de ladite fronde, un anneau 18 est fixé à la poche 9 pour la préhension de celle-ci par l'autre main 19 dudit tireur 12.

De plus, des graduations 20 peuvent être prévues sur l'élément tubulaire coulissant 5BI pour permettre au tireur 2 de connaître et de reproduire la longueur du manche 5 qui lui convient. Grâce aux graduations 20, il est en outre possible au tireur 2 de lancer toujours le même projectile P à la même distance.

## Revendications

1. Fronde, du type lance-pierres, comportant :
- une fourche (2) à deux branches (3, 4);
- un manche (5) portant ladite fourche (2);
- des liens élastiques (7, 8) attachés respectivement aux extrémités libres desdites branches (3, 4), opposées audit manche (5); et
- une poche (9) de réception de projectile (P) reliant les extrémités desdits liens élastiques (7, 8), opposées à ladite fourche (2),
**caractérisée en ce que** :
- la direction générale dudit manche (5) est inclinée par rapport à la fourche (2), de façon que, lorsque ladite fronde est tenue par un tireur (12) en position de tir, l'extrémité (13) dudit manche (5), opposée à ladite fourche (2), se trouve en regard d'une cuisse (14) dudit tireur (12); et
- ladite extrémité (13) dudit manche (5), opposée à ladite fourche (2), porte une pièce d'appui (10) apte à appuyer ladite fronde sur ladite cuisse (14).

2. Fronde selon la revendication 1,
**caractérisée en ce que** ledit manche (5) comporte une petite partie (5A), qui porte ladite fourche (2), et une grande partie (5B), qui porte ladite pièce d'appui (10) et dont la direction est inclinée par rapport à ladite fourche (2), lesdites petite et grande parties (5A, 5B) étant reliées par un coude intermédiaire (11).

3. Fronde selon l'une des revendications 1 ou 2,
**caractérisée en ce que** ledit manche (5) est réglable en longueur.

4. Fronde selon la revendication 3,
**caractérisée en ce que** ledit manche (5) porte des repères (20) permettant de connaître et de reproduire toute longueur dudit manche préalablement réglée.

5. Fronde selon l'une des revendications 1 à 4,
**caractérisée en ce que** ladite pièce d'appui (10) présente la forme d'un arc, apte à envelopper ladite cuisse (14) du tireur (12).

6. Fronde selon l'une des revendications 1 à 5,
**caractérisée en ce que** ledit manche (5) est recouvert au moins partiellement d'un revêtement de préhension (16).

7. Fronde selon l'une des revendications 1 à 6,
**caractérisée en ce que** ledit manche (5) est tubulaire.

8. Fronde selon l'une des revendications 1 à 7,
**caractérisée en ce que** ladite poche (9) de réception de projectile comporte une poignée de préhension (18).
